(19) Europäisches Patentamt
European Patent Office
Office européen des brevets

(11) EP 3 272 777 A1

(12) EUROPÄISCHE PATENTANMELDUNG

(43) Veröffentlichungstag:
**24.01.2018 Patentblatt 2018/04**

(21) Anmeldenummer: **16179867.3**

(22) Anmeldetag: **18.07.2016**

(51) Int Cl.:
***C08F 222/10*** (2006.01)
***F16B 13/14*** (2006.01)
***C04B 28/06*** (2006.01)
***C04B 40/06*** (2006.01)
*C04B 111/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder:
- **Bürgel, Thomas**
  **86899 Landsberg (DE)**
- **Thiemann, Frank**
  **86899 Landsberg/Lech (DE)**

(74) Vertreter: **Hilti Aktiengesellschaft**
**Corporate Intellectual Property**
**Feldkircherstrasse 100**
**Postfach 333**
**9494 Schaan (LI)**

# (54) REAKTIONSHARZ-ZUSAMMENSETZUNG AUF BASIS VON ZUCKERMETHACRYLAT UND DEREN VERWENDUNG

(57) Die vorliegende Erfindung betrifft eine Reaktionsharz-Zusammensetzung, welche ein Zuckermethacrylat enthält, sowie deren Verwendung als aushärtbares Bindemittel, insbesondere zur chemischen Befestigung eines Verankerungsmittels in einem Bohrloch (also als chemischer Dübel). Das Zuckermethacrylat ist bevorzugt das Methacrylat einer Hexose, insbesondere einer Furanose oder Pyranose.

EP 3 272 777 A1

## Beschreibung

Die vorliegende Erfindung betrifft eine Reaktionsharz-Zusammensetzung, welche ein Zuckermethacrylat enthält, sowie deren Verwendung als aushärtbares Bindemittel, insbesondere zur chemischen Befestigung eines Verankerungsmittels in einem Bohrloch (also als chemischer Dübel).

Die Verwendung von chemischen Befestigungsmitteln auf Basis radikalisch härtbarer Reaktionsharze ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente (die Harzkomponente) die Harzmischung und die andere Komponente (die Härterkomponente) das Härtungsmittel enthält. Andere, übliche Bestandteile, wie beispielsweise Füllmittel, Beschleuniger, Stabilisatoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Als Basisharze werden in konventionellen Reaktionsharz-Zusammensetzungen üblicherweise Vinylesterharze und insbesondere Vinylesterurethanharze eingesetzt, die durch Reaktion von monomeren oder polymeren aromatischen Diisocyanaten und Hydroxy-substituierten Methacrylaten, wie Hydroxyalkylmethacrylat, erhältlich sind. Die EP 0 713 015 B1 beispielsweise beschreibt Dübelmassen mit ungesättigten Polyesterharzen, Vinylesterharzen einschließlich Vinylesterurethanharzen als Basisharze. Auch die DE 10 2011 017 626 B4 beschreibt Vinylesterurethanharze. Die Rohstoffe für die Basisharze in derartigen Systemen stammen aus der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin chemische Befestigungssysteme mit hoher Befestigungswirkung bereitstellen zu können.

An Reaktionsharze werden in der chemischen Befestigungstechnik, z.B. bei Verwendung als Dübelmassen, hohe Anforderungen gestellt, da bei dieser Anwendung die mechanische Stärke und die Haftung an mineralischen Untergründen und auch an anderen Untergründen, wie Glas, Stahl und dergleichen, sehr gut sein müssen. Eine Größe für die Beurteilung der mechanischen Stärke und der Hafteigenschaften ist die sogenannte Versagensverbundspannung. Eine niedrige Versagensverbundspannung weist auf geringe Zugfestigkeit und geringe Haftung am Untergrund hin. Bei Verwendung von Reaktionsharzmassen als organisches Bindemittel, insbesondere für Mörtel- und/oder Dübelmassen, müssen auch unter strengen Bedingungen hohe Versagensverbundspannungen erreicht werden.

Die Erfinder haben einen Weg gefunden, ein Reaktionsharz bereitzustellen, dessen Harzkomponente ein Basisharz enthält, welches einen Anteil an Kohlenstoff aus nachwachsenden Rohstoffen aufweist. Dieser Anteil stammt aus einem Zuckermethacrylat, in welchem mindestens eine Methacrylgruppe enthalten ist. Dies hat den Vorteil, dass zur Herstellung des Reaktionsharzes auf nachwachsende Rohstoffe als Zuckerquelle zurückgegriffen werden kann.

Reaktionsharze mit biogenen Harzanteilen sind bereits aus der DE 10 2014 103 923 A1 bekannt. Die darin beschriebenen biogenen Harzanteile können unter anderem (Meth)acrylate von Zuckeralkoholen, wie beispielsweise Sorbitolacrylat, sein. Allerdings sind Acrylate nicht alkalistabil.

Auch die WO 14/064097 A1 beschreibt Reaktionsharze mit biogenen Anteilen. In der WO 14/064097 A1 sind dies Vinylesterurethanharze auf Basis einer Dianhydrohexitol-Verbindung, wie beispielsweise Isosorbid-Urethanmethacrylate. Die Dianhydrohexitol-Verbindung wird dabei mit Diisocyanat zu einem Urethan umgesetzt, das dann anschließend in einer zweiten Synthesestufe mit einem hydroxy-substituierten (Meth)acrylatester umgesetzt wird. Die Dianhydrohexitol-Verbindung wird also nicht in (Meth)acrylatform in die Reaktion eingebracht. Die in WO 14/064097 beschriebenen Harze sind jedoch laut WO 14/064097 selbst nicht einfach in der Herstellung. Außerdem bringen die verwendeten Isocyanate durch ihre hohe Molmasse einen hohen erdölbasierten Anteil ein und reduzieren so den nachwachsenden Anteil im Endprodukt.

Die Aufgabe der Erfindung ist es daher, ein Reaktionsharz-System, insbesondere Injektionssystem, für die chemische Befestigung bereitzustellen, das im Vergleich zu Reaktionsharz-Zusammensetzungen mit Basisharzen aus rein fossilen Quellen einen erhöhten Anteil an biogenen Kohlenstoffatomen in der Harzmischung hat. Zudem sollen die erfindungsgemäßen Reaktionsharz-Systeme eine den herkömmlichen Systemen vergleichbare mechanische Belastbarkeit aufweisen.

Die Aufgabe wird durch eine Reaktionsharz-Zusammensetzung mit den Merkmalen des Anspruchs 1 gelöst.

Der Erfindung lag der Gedanke zugrunde, Bestandteile von Reaktionsharz-Zusammensetzungen, die aus fossilen Quellen stammen, ganz oder teilweise durch Zucker zu ersetzen, die mit einer oder mehreren Methacrylatgruppe(n)

funktionalisiert wurden. Die Methacrylatgruppe bewirkt, dass das Molekül als Bestandteil von Reaktionsharz-Zusammensetzungen während der Härtung kovalent gebunden werden kann.

In den hier beschriebenen Beispielversuchen wurden von etwa 10 bis etwa 45 Gew.-% der Basisharze fossiler Herkunft in den Reaktionsharz-Zusammensetzungen durch Zuckermethacrylate ersetzt und damit eine der vollständig fossilen Referenzzusammensetzung vergleichbare Belastbarkeit erreicht.

Zum besseren Verständnis der Erfindung werden die folgenden Erläuterungen der hierin verwendeten Terminologie als sinnvoll erachtet. Im Sinne der Erfindung bedeuten:

- "*Zucker*" ein Saccharid, insbesondere ein Monosaccharid, bevorzugt eine Aldose oder Ketose. Für die vorliegende Erfindung werden bevorzugt Pentosen oder Hexosen verwendet. Der Zucker kann in seiner offenkettigen Form oder, falls eine solche Form existiert, in seiner zyklischen Form verwendet werden. Bevorzugt wird für die vorliegende Erfindung eine Furanose oder Pyranose verwendet, also das zyklische Halbacetal oder Acetal einer Hexose. Bevorzugte Hexosen sind Glucose, Fructose und Galactose, besonders bevorzugt ist Glucose;

- "*Zuckerderivat*" ein Derivat eines Zuckers, insbesondere ein durch Reduktion oder Dehydratisierung aus einem Zucker hergeleitetes Derivat. Bevorzugt ist ein Derivat, das statt der Keto- oder Aldehydgruppe eine Hydroxygruppe enthält, also ein Zuckeralkohol (synonym: Alditol) ist, wie hier beispielhaft D-Mannitol

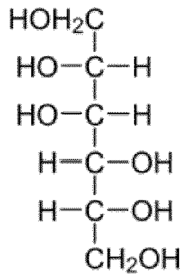

und Sorbitol

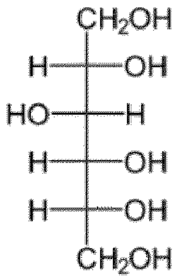

;

- "*Zucker(meth)acrylat*" einen (Meth)acrylsäureester eines wie oben definierten Zuckers oder Zuckerderivats. Bevorzugt sind in der vorliegenden Erfindung Zuckermethacrylate, also Methacrylsäureester. Ein solcher (Meth)acrylsäureester kann eine oder mehrere (Meth)acrylatgruppen tragen, und er kann auch eine weitere Funktionalisierung z.B. durch Veretherung, Veresterung von Hydroxylgruppen oder durch Ketalisierung erfahren haben, wie z.B. in den bevorzugten Zucker(meth)acrylaten

  3-O-Methacryloyl-1,2:5,6-bis-O-isopropyliden-D-glucofuranose

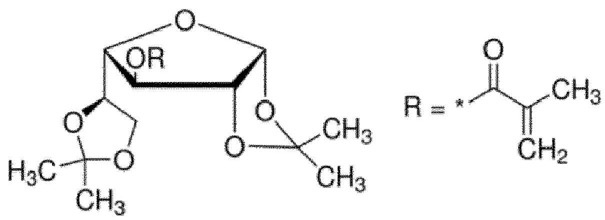

  oder

  1,2:3,4-Di-O-isopropyliden-6-O-methacryloyl-α-D-galactopyranose

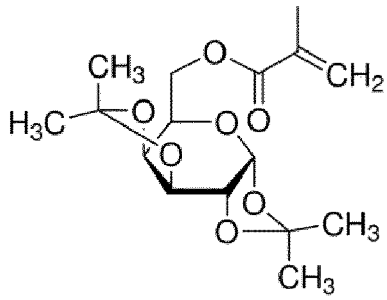

Bevorzugt ist die (Meth)acrylatgruppe direkt an eine Hydroxygruppe des Zucker(derivats) gebunden, also ein direkter (Meth)acrylsäureester.

Eine weitere Gruppe von Zucker(meth)acrylaten sind Additionsprodukte von Zuckern oder Zuckerderivaten mit Isocyanaten, die wenigstens eine (Meth)acrylateinheit aufweisen, wie 2-Isocyanatoethylmethacrylat

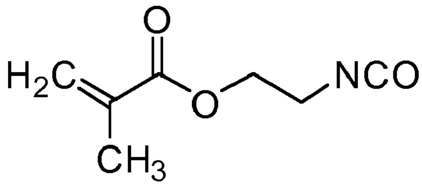

Für die vorliegende Erfindung ist ein kurzkettiges Isocyanat (also mit 1, 2, 3, oder 4 Kohlestoffatomen, bevorzugt 1 oder 2 Kohlestoffatomen in der Alkylgruppe des Isocyanats), das wenigstens eine Methacrylateinheit aufweist, bevorzugt. Bevorzugter weist das Isocyanat lediglich eine Methacrylateinheit auf. Das kurzkettige Isocyanat mit einer Methacrylateinheit ist bevorzugt ausgewählt aus der Gruppe bestehend aus Isocyanatomethylmethacrylat, 2-Isocyanatoethylmethacrylat, 3-Isocyanatopropylmethacrylat, 1-Methyl-2-isocyanatoethylmethacrylat, 1,1-Dimethyl-2-isocyanatoethylacrylat und einer Mischung aus zwei oder mehr dieser Verbindungen. Bevorzugter ist das Isocyanat ausgewählt aus der Gruppe bestehend aus Isocyanatomethylmethacrylat, 2-Isocyanatoethylmethacrylat und einer Mischung davon. Ganz besonders bevorzugt ist das Isocyanat 2-Isocyanatomethacrylat.
Von den direkten (Meth)acrylsäureestern mit Zucker-Hydroxygruppen und den Isocyanat-Additionsprodukten sind die direkten (Meth)acrylsäureester bevorzugt;

- "*Basisharz*" eine üblicherweise feste oder hochviskose radikalisch polymerisierbare Verbindung, welche durch Polymerisation härtet;

- "*Harzmischung*" eine Mischung aus einem oder mehreren Basisharz(en) und Beschleuniger(n) und Inhibitor(en) und ggf. Reaktivverdünner(n);

- "*Harzkomponente (A)*" eine Mischung aus der Harzmischung und anorganischen und/oder organischen Zuschlagstoffen;

- "*Härtungsmittel*" Stoffe, welche die Polymerisation (das Härten) des Basisharzes bewirken;

- "*Beschleuniger*" eine zur Beschleunigung der Polymerisationsreaktion (Härtung) fähige Verbindung, die dazu dient, die Bildung von Radikalen zu beschleunigen;

- "*Stabilisator*" eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden; diese Verbindungen werden üblicherweise in so geringen Mengen eingesetzt, dass die Gelzeit nicht beeinflusst wird;

- "*Inhibitor*" ebenfalls eine zur Inhibierung der Polymerisationsreaktion (Härtung) fähige Verbindung, die dazu dient, den Start der Polymerisationsreaktion unmittelbar nach der Zugabe des Härtungsmittels zu verzögern; diese Verbindungen werden üblicherweise in solchen Mengen eingesetzt, dass die Gelzeit beeinflusst wird;

- "*Reaktivverdünner*" flüssige oder niedrigviskose Monomere und Basisharze, welche die Basisharze, den Harz-Masterbatch oder die Harzmischung verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse werden;

- "*Gelzeit*" die Zeit der Härtungsphase des Reaktionsharzes bei einer Temperatur von +25°C. Dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann. Ein Verfahren zur Bestimmung der Gelzeit ist in den Beispielen beschrieben;

- "*Zweikomponenten-System*" ein Reaktionsharz-System, das zwei voneinander getrennt gelagerte Komponenten, im Allgemeinen eine Harzkomponente und eine Härterkomponente, umfasst, so dass eine Härtung des Reaktionsharzes erst nach dem Mischen der beiden Komponenten erfolgt;

- "*Mehrkomponenten-System*" ein Reaktionsharz-System, das mehrere voneinander getrennt gelagerte Komponenten umfasst, so dass eine Härtung des Reaktionsharzes erst nach dem Mischen aller Komponenten erfolgt;

- "*(Meth)acryl.../...(meth)acryl...*", dass sowohl die "Methacryl.../...methacryl.."- als auch die "Acryl.../...acryl..."-Verbindungen umfasst sein sollen; bevorzugt sind in der vorliegenden Erfindung "Methacryl.../...methacryl..."-Verbindungen;

- "*ein*", "*eine*", "*einer*" als Artikel vor einer chemischen Verbindungsklasse, z.B. vor dem Wort "Zuckermethacrylat", dass eine oder mehrere unter diese chemische Verbindungsklasse fallende Verbindungen, z.B. verschiedene Zuckermethacrylate, gemeint sein können. In einer bevorzugten Ausführungsform ist mit diesem Artikel nur eine einzelne Verbindung gemeint;

- "*mindestens ein*", "*mindestens eine*", "*mindestens einer*" zahlenmäßig "*ein oder mehrere*". In einer bevorzugten Ausführungsform ist mit diesem Begriff zahlenmäßig "*ein*", "*eine*", "einer*"* gemeint;

- "*enthalten*", "*umfassen*" und "*beinhalten*", dass neben den genannten Bestandteilen noch weitere vorhanden sein können. Diese Begriffe sind einschließlich gemeint und umfassen daher auch "*bestehen aus*". "*Bestehen aus*" ist abschließend gemeint und bedeutet, dass keine weiteren Bestandteile vorhanden sein können. In einer bevorzugten Ausführungsform bedeuten die Begriffe "*enthalten*", "*umfassen*" und "*beinhalten*" den Begriff "*bestehen aus*";

- "*etwa*" vor einem Zahlenwert einen Bereich von ± 5% dieses Wertes, bevorzugt ± 2% dieses Wertes, besonders bevorzugt ± 0% dieses Wertes (also genau diesen Wert).

Die erfindungsgemäß verwendbaren Zucker und Zuckerderivate enthalten typischerweise eines oder mehrere Stereozentren. Da die in der Erfindung verwendeten Zucker und Zuckerderivate vorteilhafterweise biogene Zucker und Zuckerderivate sind, haben sie typischerweise dieselbe Stereochemie wie ihre natürlichen Vorläufer, z.B. D-Glucose. Die Verwendung von Zuckern oder Zuckerderivaten mit nicht-natürlicher Stereochemie ist jedoch ebenfalls möglich.

Ein erster Gegenstand der Erfindung ist eine Reaktionsharz-Zusammensetzung mit einer Harzkomponente (A), die mindestens ein Zucker(meth)acrylat enthält, und einer Härterkomponente (B), die ein Härtungsmittel (wie etwa ein Peroxid) für das mindestens eine Zucker(meth)acrylat enthält. Die Komponenten (A) und (B) sind bis zur Verwendung der Reaktionsharz-Zusammensetzung räumlich getrennt voneinander verpackt, damit erst eine Reaktion stattfindet, wenn die beiden Komponenten miteinander in Kontakt gebracht werden. Typischerweise enthält die Harzkomponente (A) neben dem Zucker(meth)acrylat noch mindestens eine weitere radikalisch härtbare Verbindung, zum Beispiel ein nicht zuckerbasiertes (Meth)acrylat oder ein Urethan(meth)acrylat.

Es ist bevorzugt, dass das mindestens eine Zucker(meth)acrylat ein Zuckermethacrylat ist. Die erfindungsgemäße Reaktionsharz-Zusammensetzung ist also bevorzugt eine Reaktionsharz-Zusammensetzung mit einer Harzkomponente (A), die mindestens ein Zuckermethacrylat enthält, und einer Härterkomponente (B), die ein Härtungsmittel (wie etwa ein Peroxid) für das mindestens eine Zuckermethacrylat enthält. Grund ist die höhere Alkalistabilität von Methacrylen im Vergleich zu Acrylen. Auch die mindestens eine weitere radikalisch härtbare Verbindung ist daher bevorzugt kein Acrylat, sondern ein Methacrylat.

Dadurch ist es den Erfindern gelungen, eine Reaktionsharz-Zusammensetzung bereitzustellen, welche im Vergleich zu Reaktionsharz-Zusammensetzungen mit Basisharzen aus rein fossilen Quellen einen erhöhten Anteil an biogenen Kohlenstoffatomen in der Harzmischung hat. Zudem haben die erfindungsgemäß bevorzugten Reaktionsharz-Zusammensetzungen, in denen ein Zuckermethacrylat verwendet wird, gegenüber Zusammensetzungen mit Acrylaten den Vorteil, dass sie alkalistabiler sind.

Die Harzkomponente (A) der erfindungsgemäßen Reaktionsharz-Zusammensetzung enthält erfindungsgemäß ein Zucker(meth)acrylat oder eine Mischung aus zwei oder mehreren Zucker(meth)acrylaten. Das erfindungsgemäß verwendete Zucker(meth)acrylat kann in der Reaktionsharz-Zusammensetzung als Basisharz (Backbone-Harz) oder als Reaktivverdünner verwendet werden. Wie bereits oben dargestellt, ist das mindestens eine Zucker(meth)acrylat bevorzugt ein Zuckermethacrylat oder eine Mischung aus zwei oder mehreren Zuckermethacrylaten. Im Folgenden werden die geeigneten Zuckermethacrylate näher beschrieben; diese Beschreibung ist jedoch auch auf Zuckeracrylate übertragbar, auf deren separate Beschreibung daher hier verzichtet wird. Es sei jedoch nochmals betont, dass das erfindungsgemäß verwendete Zucker(meth)acrylat bevorzugt ein Methacrylat eines Zuckers oder Zuckerderivats (oder einer Mischung aus zwei oder mehreren Zuckern oder Zuckerderivaten) ist.

Die für die erfindungsgemäße Reaktionsharz-Zusammensetzung und ihre Verwendung geeigneten Zuckermethacrylate werden im folgenden näher beschrieben:

Jedes Methacrylat eines wie oben definierten Zuckers oder Zuckerderivats ist zur Durchführung der vorliegenden Erfindung geeignet. Das erfindungsgemäß verwendete Zuckermethacrylat trägt mindestens eine Methacrylatgruppe, es kann jedoch zusätzlich noch weitere Methacrylatgruppen tragen. Zuckermethacrylate mit einer einzigen Methacrylatgruppe oder mit zwei Methacrylatgruppen sind bevorzugt. In einer spezifischen Ausführungsform werden Zuckermethacrylate mit einer einzigen Methacrylatgruppe verwendet, in einer anderen spezifischen Ausführungsform werden Zuckermethacrylate mit zwei Methacrylatgruppen verwendet. Auch Mischungen aus Zuckermethacrylaten mit einer Methacrylatgruppe und Zuckermethacrylaten mit zwei Methacrylatgruppen sind möglich (was z.B. einen Methacrylatgruppengehalt von 1-2 Methacrylatgruppen oder von 1,5-2 Methacrylatgruppen pro Zuckermolekül ergibt). Neben der mindestens einen Methacrylatgruppe kann das Zuckermethacrylat noch weitere funktionelle Gruppen tragen, insbesondere funktionelle Gruppen, die durch Veretherung, Veresterung oder Ketalisierung der freien Hydroxylgruppen im Zuckermolekül entstanden sind. Bevorzugte weitere funktionelle Gruppen sind Ketale, wie sie in 3-O-Methacryloyl-1,2:5,6-bis-O-isopropyliden-D-glucofuranose

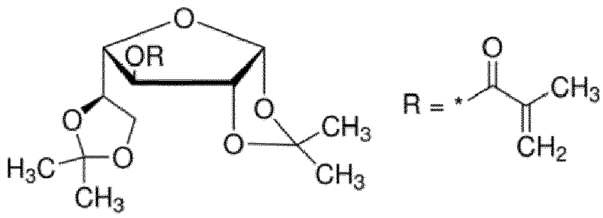

oder 1,2:3,4-Di-O-isopropyliden-6-O-methacryloyl-α-D-galactopyranose

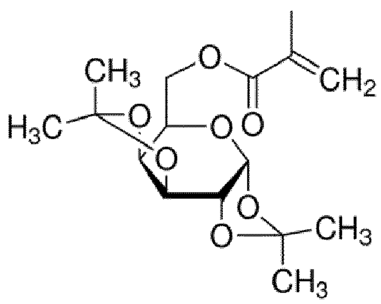

vorkommen.

Das Zuckermethacrylat ist erfindungsgemäß bevorzugt das Methacrylat eines Monosaccharids, besonders bevorzugt einer Aldose oder Ketose. Diese Aldose oder Ketose ist typischerweise eine Triose, Tetrose, Pentose oder Hexose. Für die vorliegende Erfindung sind Methacrylate von Pentosen oder Hexosen ganz besonders bevorzugt und geeignet. Der Zucker kann in seiner offenkettigen Form oder, falls eine solche Form existiert, in seiner zyklischen Form im Zuckermethacrylat vorliegen.

In einer bevorzugten Ausführungsform ist das Zuckermethacrylat das Methacrylat einer Furanose oder Pyranose, also ein Methacrylsäureester des zyklischen Halbacetals oder Acetals einer Hexose. Bevorzugte Hexosen sind hierbei Glucose, Fructose und Galactose, wobei Glucofuranose und Galactopyranose besonders bevorzugt sind und Glucofuranose ganz besonders bevorzugt ist. Das Zuckermethacrylat einer Furanose oder Pyranose enthält bevorzugt eine oder zwei oder 1-2 Methacrylatgruppen, besonders bevorzugt eine Methacrylatgruppe.

In einer weiteren bevorzugten Ausführungsform ist das Zuckermethacrylat das Methacrylat eines Zuckeralkohols. Dieser Zuckeralkohol ist bevorzugt ein Pentose- oder Hexose-Zuckeralkohol, besonders bevorzugt ein Hexosealkohol, wobei Sorbitol besonders bevorzugt ist. Das Zuckermethacrylat eines Zuckeralkohols enthält bevorzugt eine oder zwei oder 1-2 Methacrylatgruppen, besonders bevorzugt zwei Methacrylatgruppen.

Jedoch sind Methacrylate von Zuckeralkohol oft hochviskos und erfordern daher hohe Ausbring- bzw. Auspresskräfte. Deshalb sind sie für die vorliegende Anmeldung weniger bevorzugt als die anderen hier beschriebenen Zuckermethacrylate, und insbesondere weniger bevorzugt als die Methacrylate von Aldosen und Ketosen.

Des Weiteren ist es bevorzugt, dass das erfindungsgemäß verwendete Zuckermethacrylat keine freie Hydroxygruppe enthält.

Besonders bevorzugt ist das Zuckermethacrylat ein Methacrylat von D-Glucose mit 1-2 Methacrylatgruppen pro D-Glucose-Molekül, 1,2:3,4-Di-O-isopropyliden-6-O-methacryloyl-α-D-galactopyranose (CAS-Nummer 2715-36-8), 3-O-Methacryloyl-1,2:5,6-bis-O-isopropyliden-D-glucofuranose (CAS-Nummer 6613-70-3) oder Sorbitol-dimethacrylat. Noch bevorzugter ist das Zuckermethacrylat ein Methacrylat von D-Glucose mit 1,5-2 Methacrylatgruppen pro D-Glucose-Molekül, 1,2:3,4-Di-O-isopropyliden-6-O-methacryloyl-α-D-galactopyranose (CAS-Nummer 2715-36-8), oder 3-O-Methacryloyl-1,2:5,6-bis-O-isopropyliden-D-glucofuranose (CAS-Nummer 6613-70-3). Ganz besonders bevorzugt ist das Zuckermethacrylat 3-O-Methacryloyl-1,2:5,6-bis-O-isopropyliden-D-glucofuranose (CAS-Nummer 6613-70-3).

1,2:3,4-Di-O-isopropyliden-6-O-methacryloyl-α-D-galactopyranose trägt eine Methacrylgruppe und hat die folgende Strukturformel:

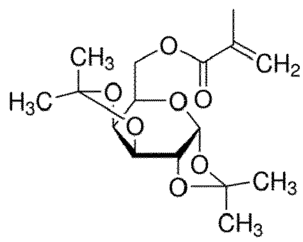

3-O-Methacryloyl-1,2:5,6-bis-O-isopropyliden-D-glucofuranose trägt eine Methacrylgruppe und hat die folgende Strukturformel:

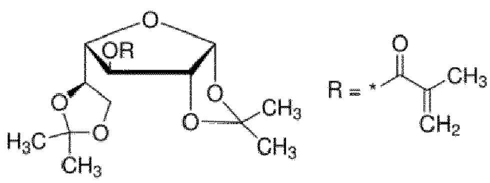

Zuckermethacrylate und Verfahren zu ihrer Herstellung sind an sich bekannt und entsprechende Produkte sind am Markt verfügbar (z.B. von Sigma Aldrich oder ABCR).

Hergestellt werden können Zuckermethacrylate durch Umesterung von Zuckern mit Alkylmethacrylaten. Weitere Herstellungsverfahren sind beispielsweise die Reaktion von Zuckern mit Isocyanatoethylmethacrylaten, wie sie in WO 14/064097 beschrieben ist, welche hier durch Bezugnahme aufgenommen wird.

Durch die Verwendung der Zuckermethacrylate in der erfindungsgemäßen Reaktionsharz-Zusammensetzung wird der Anteil an biogenen Harzen in der erfindungsgemäßen Reaktionsharz-Zusammensetzung im Vergleich zu Reaktionsharz-Zusammensetzungen mit Harzen aus rein fossilen Quellen erhöht, ohne dass die Belastbarkeit des Reaktionsharzes dadurch verschlechtert wird.

Die in den erfindungsgemäß verwendeten Zuckermethacrylaten vorhandene Methacrylgruppe hat die folgende Struktur:

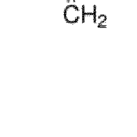

,

, wobei * die Stelle der Bindung an die Hydroxygruppe des Zuckers ist. Die Verwendung dieses kurzkettigen Methacrylates in den Zuckermethacrylaten anstelle von anderen Acrylaten ermöglicht einen sehr geringen Anteil von Kohlenstoffatomen

aus fossilen Quellen im resultierenden Zuckermethacrylat. Dasselbe gilt für die oben beschriebenen kurzkettigen Isocyanate.

Die Verwendung des kurzkettigen Methacrylats oder eines wie oben definierten kurzkettigen Isocyanats enthaltend eine Methacrylatgruppe hat einen weiteren Vorteil, zum Beispiel im Vergleich mit den in WO 14/064097 beschriebenen Harzen. In WO 14/064097 wird eine Dianhydrohexitol-Verbindung mit Diisocyanat zu einem Urethan umgesetzt, das dann anschließend in einer zweiten Synthesestufe mit einem hydroxy-substituierten (Meth)acrylsäureester umgesetzt wird. Die in WO 14/064097 verwendeten, langkettigen Diisocyanate, insbesondere Hexamethylen- und Decamethylendiisocyanat, führen zu sehr langkettigen Molekülen mit einer geringen Doppelbindungsdichte. Durch Verwendung des kurzkettigen Methacrylats oder kurzkettiger Isocyanate mit einer Methacrylgruppe, z.B. Isocyanatoethylmethacrylat, können kurzkettige, zuckerbasierte Methacrylatharze mit einer höheren Doppelbindungsdichte hergestellt werden.

In der vorliegenden Erfindung ist das Zuckermethacrylat entweder das einzige Basisharz in der Harzmischung, oder es sind noch eine weitere oder mehrere weitere radikalisch härtbare Verbindungen als Basisharze in der Harzmischung vorhanden. Bevorzugt ist mindestens eine weitere radikalisch härtbare Verbindung als Basisharz in der Harzmischung vorhanden.

Der prozentuale Anteil (in Gew.-% der Harzmischung) von Zuckermethacrylat in der Harzmischung beträgt vorteilhafterweise mehr als etwa 5%, bevorzugt mehr als etwa 15%, und besonders bevorzugt mehr als etwa 20%. Der prozentuale Anteil (in Gew.-% der Harzmischung) von Zuckermethacrylat in der Harzmischung beträgt vorteilhafterweise von etwa 5% bis etwa 90%, bevorzugt von etwa 8% bis etwa 80%, bevorzugter von etwa 10% bis etwa 60%, bevorzugter von etwa 20% bis etwa 50%, noch bevorzugter von etwa 25% bis etwa 50%, besonders bevorzugt von etwa 25% bis etwa 45% und ganz besonders bevorzugt von etwa 28% bis etwa 40%. In einer Ausführungsform der Erfindung wird die erfindungsgemäße Reaktionsharz-Zusammensetzung zur Befestigung eines Verankerungsmittels aus Stahl oder Eisen in einem Bohrloch in Stahl verwendet; in dieser Ausführungsform ist der prozentuale Anteil (in Gew.-% der Harzmischung) von Zuckermethacrylat in der Harzmischung vorteilhafterweise in den im vorhergehenden Satz genannten Bereichen, kann jedoch besonders vorteilhafterweise mehr als etwa 20%, bevorzugter sogar mehr als etwa 30% betragen, beispielsweise von etwa 25% bis etwa 45%, besonders bevorzugt von etwa 25% bis etwa 40% und ganz besonders bevorzugt von etwa 28% bis etwa 36%.

Der prozentuale Anteil an biogenen C-Atomen aus dem Zuckerteil des Zuckermethacrylats an der Gesamtheit der C-Atome einschließlich der C-Atome aus fossilen Quellen (zu denen beispielsweise auch die C-Atome aus dem Methacrylat-Teil der Zuckermethacrylate zählen) in der Harzmischung beträgt vorteilhafterweise von etwa 3% bis etwa 40%, bevorzugt von etwa 5% bis etwa 40%, noch bevorzugter von etwa 10% bis etwa 35%, besonders bevorzugt von etwa 10% bis etwa 25%, noch mehr bevorzugt von etwa 12% bis etwa 25%, und ganz besonders bevorzugt von etwa 15% bis etwa 23%. In einer speziell bevorzugten Ausführungsform beträgt dieser Anteil von etwa 17% bis etwa 22%. Hinzu kommen noch biogene C-Atome aus anderen Quellen, also weiteren biogenen Bestandteilen, wie z.B. biogenen Isocyanaten und Methacrylaten mit biogenen C-Atomen (wie z.B. Isobornylmethacrylat). Ermittelt wird der Anteil an biogenen C-Atomen wie in den Beispielen beschrieben.

In einer Ausführungsform der Erfindung wird die erfindungsgemäße Reaktionsharz-Zusammensetzung zur Befestigung eines Verankerungsmittels aus Stahl oder Eisen in einem Bohrloch in Stahl verwendet; in dieser Ausführungsform kommen bevorzugt noch biogene C-Atome aus biogenen Reaktivverdünnern, z.B. Methacrylaten mit biogenen C-Atomen (wie z.B. Isobornylmethacrylat), zu den biogenen C-Atomen aus dem Zuckermethacrylat hinzu. So können Anteile an biogenen C-Atomen in der Harzmischung von mehr als etwa 40% und sogar mehr als etwa 50% erreicht werden.

Als weitere radikalisch härtbare Verbindungen neben dem Zuckermethacrylat sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Besonders bevorzugte Vinylesterharze sind Epoxy(meth)acrylate, die Dimethacrylate ethoxylierter Bisphenole, und Urethan(meth)acrylate. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird die DE 10 2011 017 626 B4, und vor allem ihre Beschreibung der Zusammensetzung dieser Harze, insbesondere in den Beispielen der DE 10 2011 017 626 B4, hier durch Bezugnahme aufgenommen.

Beispiele geeigneter ungesättigter Polyester, die in der erfindungsgemäßen Harzmischung verwendet werden können, werden in folgende Kategorien eingeteilt, wie sie durch M. Malik et al. in J. M. S. - Rev. Macromol. Chem. Phys.,

C40(2 and 3), p.139-165 (2000) klassifiziert wurden:

(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;

(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;

(3) Bisphenol-A-fumarate: diese basieren auf ethoxyliertem Bisphenol-A und Fumarsäure;

(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in DE 10 2011 017 626 B4 beschriebenen Urethanmethacrylatharze (die auch als Vinylesterurethanharze bezeichnet werden), deren Zusammensetzung hier durch Bezugnahme aufgenommen wird.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycol-mono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol,

andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß als weitere radikalisch härtbare Verbindungen neben dem Zuckermethacrylat verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Für das erfindungsgemäße Reaktionsharz sind die in den Beispielen beschriebenen weiteren Harze, die neben dem Zuckermethacrylat in der Harzkomponente vorhanden sind, als weitere radikalisch härtbare Verbindungen neben dem Zuckermethacrylat bevorzugt.

Zweckmäßig wird die Härtung des Reaktionsharzes mit einem Peroxid als Härtungsmittel initiiert. Neben dem Peroxid kann zusätzlich ein Beschleuniger verwendet werden. Alle dem Fachmann bekannten Peroxide, die zum Härten von Methacrylatharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

In einer bevorzugten Ausführungsform der Erfindung enthält die Harzmischung weitere niederviskose, radikalisch polymerisierbare Verbindungen als Reaktivverdünner für das Basisharz, welches das Zuckermethacrylat enthält, um die Viskosität der Harzmischung falls erforderlich, anzupassen. Diese werden zweckmäßig zum Basisharz gegeben und sind daher bei dem erfindungsgemäßen System in der Komponente (A) enthalten.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester ausgewählt werden aus der Gruppe bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxi-di(meth)acrylat, Di-[(meth)acryloyl-maleoyl]-tricyclo-5.2.1.0.$^{2.6}$-decan, Dicyclopentenyloxyethylcrotonat, 3-(Meth)acryloyl-oxymethyl-tricylo-5.2.1.0.$^{2.6}$-decan,

3-(Meth)cyclo-pentadienyl(meth)acrylat, Isobornyl(meth)acrylat und Decalyl-2-(meth)acrylat. Biogene Reaktivverdünner wie Tetrahydrofurfuryl(meth)acrylat oder Isobornylmethacrylat sind bevorzugt.

Grundsätzlich können auch andere übliche radikalisch polymerisierbare Verbindungen, allein oder im Gemisch mit den Zucker(meth)acrylsäureestern, als Reaktivverdünner eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Bevorzugte Reaktivverdünner sind die in den Beispielen verwendeten Reaktivverdünner.

Die Harzmischung enthält bevorzugt des Weiteren mindestens einen Beschleuniger. Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin- und Toluidin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxylalkyl)anilin mit Dicarbonsäuren oder durch Polyaddition von Ethylenoxid und diese Amine erhalten werden, sind ebenso als Beschleuniger geeignet.

Bevorzugte Beschleuniger sind die in den Beispielen verwendeten Beschleuniger.

Als Inhibitoren sowohl für die Lagerstabilität des Zuckermethacrylats und der ggf. vorhandenen weiteren radikalisch härtbaren Verbindung und damit der Harzkomponente (A) als auch zur Einstellung der Gelzeit sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, für die erfindungsgemäße Reaktionsharz-Zusammensetzung geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-oxyl-Radikale können beispielsweise solche verwendet werden, wie sie in der DE 199 56 509 beschrieben sind. Geeignete stabile N-oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl-Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind die in den Beispielen verwendeten Inhibitoren.

Die Inhibitoren können, abhängig von den gewünschten Eigenschaften der Harzmischung, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktionsharz-Zusammensetzung zeigt.

Zweckmäßig sind die Inhibitoren in der ersten Komponente (A) enthalten.

In einer Ausführungsform kann die Reaktionsharz-Zusammensetzung zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung der Zweikomponenten-Dübelmasse z.B. in Diamant-gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst 3-(Meth)acryloyl-oxypropyltrimethoxysilan, 3-(Meth)acryloyl-oxypropyltriethoxysilan, 3-(Meth)acryloyl-oxymethyltrimethoxysilan, 3-(Meth)acryloyloxymethyltriethoxysilan, Vinyltrimethoxysilan, Vinyltriethoxysilan, Tetraethoxysilan, Tetramethoxysilan, Tetrapropoxysilan, Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler wird zweckmäßig in Mengen zwischen 1 und 10 Gew.-% bezogen auf die Harzmischung in der Komponente (A) zugegeben.

Die Komponenten (A) und (B) können ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure), Silikate, Tonerde, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Harzkomponente (A) besonders bevorzugt sind Füllstoffe ausgewählt aus der Gruppe bestehend aus Zement, pyrogener Kieselsäure, Quarzsand, Quarzmehl, und Mischungen aus zwei oder mehreren davon. Ganz besonders bevorzugt ist für die Komponente (A) eine Mischung aus Zement (insbesondere Tonerdezement oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

Ganz besonders bevorzugt sind die in den Beispielen verwendeten Füllstoffe.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Anmeldungen WO 02/079341 und WO 02/079293 sowie WO 2011/128061 A1, deren diesbezüglicher Inhalt hiermit in diese Anmeldung aufgenommen wird.

Bei einer besonders bevorzugten Ausführungsform der erfindungsgemäßen Reaktionsharz-Zusammensetzung enthält die Komponente (A) neben dem Zuckermethacrylat und der weiteren radikalisch härtbaren Verbindung zusätzlich noch eine hydraulisch abbindende oder polykondensierbare anorganische Verbindung, insbesondere Zement, und die Komponente (B) neben dem Härtungsmittel für das mindestens eine Zucker(meth)acrylat noch Wasser. Derartige Hybridmörtelsysteme sind ausführlich in DE 42 31 161 A1 beschrieben. Dabei enthält die Komponente (A) vorzugsweise als hydraulisch abbindende oder polykondensierbare anorganische Verbindung Zement, beispielsweise Portlandzement oder Tonerdezement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

In einer bevorzugten Ausführungsform enthält die Komponente (A) also folglich:

- mindestens ein Zuckermethacrylat;
- mindestens eine weitere radikalisch härtbare Verbindung; und
- mindestens eine hydraulisch abbindende oder polykondensierbare anorganische Verbindung,

und die Komponente (B) enthält:

- mindestens ein Härtungsmittel für das mindestens eine Zucker(meth)acrylat; und
- Wasser.

In einer bevorzugteren Ausführungsform enthält die Komponente (A):

- mindestens ein Zuckermethacrylat;
- mindestens eine weitere radikalisch härtbare Verbindung;
- mindestens einen Reaktivverdünner;
- mindestens einen Beschleuniger;
- mindestens einen Inhibitor; und
- mindestens eine hydraulisch abbindende oder polykondensierbare anorganische Verbindung,

und die Komponente (B) enthält:

- mindestens ein Härtungsmittel für das mindestens eine Zucker(meth)acrylat;
- mindestens einen Füllstoff, bevorzugt pyrogene Kieselsäure; und
- Wasser.

In einer besonders bevorzugten Ausführungsform sind die Bestandteile der Komponenten (A) und/oder (B) eines oder mehrere der Bestandteile, welche in den einzelnen erfindungsgemäßen Beispielen genannt werden. Ganz besonders bevorzugt sind Reaktionsharz-Zusammensetzungen, in welchen die Komponente (A) und optional auch die Komponente (B) dieselben Bestandteile enthält oder aus denselben Bestandteilen besteht, wie sie in den einzelnen erfindungsgemäßen Beispielen genannt werden, und zwar bevorzugt in den dort genannten Anteilen.

Die erfindungsgemäße Reaktionsharz-Zusammensetzung ist ein Mehrkomponenten-System, typischerweise ein Zweikomponenten-System. Dieses Mehrkomponenten-System kann in Form eines Patronen-Systems, eines Kartuschen-Systems oder eines Folienbeutel-Systems vorliegen. Bei der bestimmungsgemäßen Verwendung der erfindungsgemäßen Reaktionsharz-Zusammensetzung werden die Komponenten entweder unter Einwirkung mechanischer

Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktionsharz beschickte Bohrloch eingebracht und entsprechend justiert werden.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet sie sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen. In einer besonders bevorzugten Ausführungsform ist der Untergrund des Bohrlochs Stahl, das Verankerungsmittel besteht aus Stahl oder Eisen, und das in der erfindungsgemäßen Reaktionsharz-Zusammensetzung enthaltene Zuckermethacrylat ist Sorbitoldimethacrylat.

Ein weiterer Gegenstand der Erfindung ist die Verwendung der erfindungsgemäßen Reaktionsharz-Zusammensetzung als aushärtbares Bindemittel, insbesondere zur Befestigung von Verankerungsmitteln in Bohrlöchern verschiedenen Untergrunds und zum baulichen Kleben. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen. In einer besonders bevorzugten Ausführungsform ist der Untergrund des Bohrlochs Stahl, das Verankerungsmittel besteht aus Stahl oder Eisen, und das in der erfindungsgemäßen Reaktionsharz-Zusammensetzung enthaltene Zuckermethacrylat ist Sorbitoldimethacrylat.

Die erfindungsgemäße Reaktionsharz-Zusammensetzung zeichnet sich durch eine Belastbarkeit aus, welche der Belastbarkeit von rein fossilen Zusammensetzungen ähnelt oder sogar höher als diese ist. Die Belastbarkeit wird im Kontext der vorliegenden Erfindung durch die wie in den Beispielen beschriebene Messung der Versagensverbundspannung ermittelt.

Die Erfindung wird im Folgenden anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

BEISPIELE

Es wurden erfindungsgemäße Reaktionsharz-Zusammensetzungen und Vergleichs-Reaktionsharz-Zusammensetzungen hergestellt. Die Zusammensetzung der in den Reaktionsharz-Zusammensetzungen verwendeten Harzkomponenten (A) sowie die verwendeten Härterkomponenten (B) können den weiter unten gezeigten Tabellen 1 und 2 entnommen werden.

Alle hier aufgelisteten Bestandteile der Zusammensetzungen sind - soweit nicht anders angegeben - kommerziell erhältlich und wurden in der kommerziell üblichen Qualität eingesetzt. Eine Auflistung der Bestandteile, ihrer Handelsnamen und Bezugsquellen findet sich am Ende der Beispiele.

Als Härterkomponente (B) wurden jeweils die derzeit kommerziell verfügbaren Härterkomponenten (Hilti AG, FL-Schaan) der Injektionsmörtel Hilti HIT-CT1, Hilti HIT-HY100 bzw. Hilti HIT-HY200A verwendet. Diese Härterkomponenten enthalten Benzoylperoxid als Härtungsmittel, des Weiteren pyrogene Kieselsäure, weitere Füllstoffe und Wasser.

In den erfindungsgemäßen Reaktionsharz-Zusammensetzungen wurden Sorbitol-dimethacrylat (bezogen von ABCR) und 3-O-Methacryloyl-1,2:5,6-bis-O-isopropyliden-D-glucofuranose (CAS-Nummer 6613-70-3; bezogen von Sigma Aldrich) und Glucosemethacrylat (mit etwa 1,5-2 Methacrylateinheiten pro Glucosemolekül) als Zuckermethacrylate verwendet.

<u>Berechnung des Anteils an biogenem Kohlenstoff in der Harzmischung</u>

Der Anteil an biogenem Kohlenstoff in den Zuckermethacrylaten ergibt sich aus dem Verhältnis der Anzahl der C-Atome im verwendeten Zucker (z.B. 6 im Sorbitol), also der Anzahl biogener C-Atome, zur Gesamtzahl der C-Atome in den Zuckermethacrylaten (welche die Summe aus biogenen C-Atomen und nicht-biogenen C-Atomen ( z.B. 4 nicht-biogenen C-Atomen pro Methacrylgruppe aus fossilen Quellen) ist). Sorbitol-dimethacrylat ist daher zu 6/(6+4+4) = 6/14 = 42,9% biogen. Über die Verdünnung mit den Harzbestandteilen rein fossilen Ursprungs verringert sich der biogene Anteil in der Harzmischung (welche neben dem Zuckermethacrylat auch fossile Harze, Beschleuniger, Inhibitoren enthielt) proportional. In die Berechnung einbezogen wurden neben den Zuckermethacrylaten die weiteren Basisharze und Reaktivverdünner, Beschleuniger und Inhibitoren in der Harzmischung. Der Anteil an zuckerbasiertem biogenem Kohlenstoff in der Harzmischung berechnete sich somit wie folgt:

([Summe der biogenen C-Atome im Zuckermethacrylat] / [Summe aller C-Atome im Zuckermethacrylat]) * [Anteil des Zuckermethacrylats in der Harzmischung in Gew.-%].

Der Anteil an insgesamt biogenem Kohlenstoff (also biogenem Kohlenstoff in den Zuckermethacrylaten und in anderen Harzmischungs-Bestandteilen, z.B. in biogenen Reaktivverdünnern wie IBOMA) in der Harzmischung berechnete sich als:

([Summe aller biogenen C-Atome in den biogenen Bestandteilen] / [Summe aller C-Atome in den biogenen Bestandteilen]) * [Anteil der biogenen Rohstoffe in der Harzmischung in Gew.-%].

Für 3-O-Methacryloyl-1,2:5,6-bis-O-isopropyliden-D-glucofuranose wurde für die Berechnung angenommen, dass das zur Ketalisierung verwendete Aceton fossilen Ursprungs ist; durch die Verwendung von biogenem Aceton könnte der Anteil an nachwachsendem Kohlenstoff weiter erhöht werden.

Der Anteil an biogenem Kohlenstoff in den hier verwendeten Reaktionsharz-Harzmischungen kann den weiter unten gezeigten Tabellen 1 und 2 entnommen werden.

Herstellung der Reaktionsharz-Zusammensetzungen

Die Reaktionsharz-Zusammensetzungen wurden wie folgt hergestellt und verwendet:

Basisharz und Reaktivverdünner wurden in einem geeigneten Gefäß unter leichtem Erwärmen homogenisiert und Beschleuniger sowie Inhibitoren nach deren Zugabe aufgelöst. Zu der entstandenen Mischung wurden Verdickungsmittel und Füllstoffe gegeben und diese mittels 1 Liter-Dissolver der Fa. PC Laborsystem für 10 min unter einem Vakuum von ca. 80 mbar und mit einer Umdrehungsgeschwindigkeit von 3500 Upm gerührt.

Die so hergestellte Harzkomponente (A) wurde ebenso wie die verwendete Härterkomponente (B) in 2-Komponenten-Plastikkartuschen abgefüllt und durch Auspressen über einen Statikmischer zur Reaktion gebracht.

Die folgenden Tests wurden mit den Reaktionsharz-Zusammensetzungen durchgeführt:

Gelzeit

Die Gelzeit der Mischung, die aus der Harzkomponente (A) und der Härterkomponente (B) des Zweikomponenten-Reaktionsharzes erhalten wurde, wurde mit einem herkömmlichen Gerät (Geltimer) bei einer Temperatur von 25°C bestimmt. Harzkomponente (A) und Härterkomponente (B) wurden aus der Plastikkartusche über einen Statikmischer bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). Ein Glasstab oder eine Spindel wurde mit 10 Hüben pro Minuten in dem Harz auf und ab bewegt. Die Gelzeit entspricht dem Zeitpunkt, zu dem das Teströhrchen durch den oszillierenden Stab angehoben wurde. Die so erhaltenen Gelzeiten sind in Tabelle 1 und 2 aufgelistet.

Versagensverbundspannung

Zur Bestimmung der Versagensverbundspannung der ausgehärteten Zusammensetzung wurde entweder ("M12*72") eine M12 Gewindeankerstange mit metrischem Gewinde verwendet, die mit dem Zweikomponenten-Reaktionsharz in ein Bohrloch in Beton der Festigkeitsklasse C20/25 mit einem Durchmesser von 14 mm und einer Tiefe von 72 mm eingedübelt wurde, oder ("M8*36") eine M8 Gewindeankerstange verwendet, die mit dem Zweikomponenten-Reaktionsharz in einen Stahlzylinder mit einer Bohrung mit dem Durchmesser von 10 mm und einer Tiefe von 36 mm eingedübelt wurde. Die Innenwand der Bohrung in dem Stahlzylinder wies dabei Rillen mit einer Tiefe von ca. 0,3 mm auf.

Die durchschnittliche Versagensverbundspannung wurde durch Ausziehen der Gewindeankerstange mit enger Abstützung und Verwendung einer hochfesten Gewindeankerstange bestimmt. Es wurden jeweils 3 Gewindeankerstangen eingedübelt und deren Versagensverbundspannung nach 24 Stunden Aushärtung bei Raumtemperatur bestimmt. Die so erhaltenen Versagensverbundspannungen (angegeben in [$N/mm^2$]) sind als Durchschnittswerte in Tabelle 1 und

2 aufgelistet.

Der Vollständigkeit halber sei hier klargestellt, dass die zum Ausziehen der Gewindestange aus einen Bohrloch in Beton benötigte Kraft F in der Literatur als Versagenslast oder Lastwert bezeichnet wird (üblicherweise angegeben in [kN]), und die zum Ausziehen der Gewindestange aus einer Stahlhülse benötigte Kraft üblicherweise als innere Festigkeit bezeichnet wird (üblicherweise angegeben in [kN]). Die Umrechnung dieser Parameter in die Versagensverbundspannung erfolgt über die Geometrie. Die für die Umrechnung verwendete Fläche ergibt sich aus der Berechnung der Mantelfläche eines Zylinders (Fläche = Durchmesser * Pi * Eindübel-Tiefe), wobei vom Durchmesser der Gewindestange und der Tiefe, in der die Stange eingedübelt wurde, ausgegangen wird. Das bedeutet also im Falle von "M12*72" einen Durchmesser von 12 mm und eine Eindübel-Tiefe von 72 mm, und im Falle von "M8*36" einen Durchmesser von 8 mm und eine Eindübel-Tiefe von 36 mm.

Die Versagensverbundspannung (tau) ergibt sich dann als

$$\text{tau} = \text{F [in N] / Fläche [in mm}^2\text{]}$$

Die Testergebnisse werden in Tabelle 1 und 2 gezeigt.

Die Ergebnisse belegen, dass die erfindungsgemäßen Reaktionsharz-Zusammensetzungen ähnliche Versagensverbundspannungen aufweisen wie die Referenz-Zusammensetzungen ohne Zuckermethacrylate. Die Befestigungswirkung der erfindungsgemäßen Zusammensetzungen ist also der Befestigungswirkung konventioneller Zusammensetzungen vergleichbar.

**Tabelle 1:** Getestete Zusammensetzungen, biogener C-Anteil und Testergebnisse in Beton-Bohrloch; die Anteile der aufgeführten Bestandteile sind, soweit nicht anders angegeben, in Gew.-% angegeben.

| | Harzkomponente (A) | **Referenz 1** | Beispiel 1 | Beispiel 2 | Beispiel 3 | Beispiel 4 |
|---|---|---|---|---|---|---|
| Basisharz | UMA | 15,6 | 11,6 | 11,6 | 15,6 | 10 |
| Reaktiv-verdünner | BDDMA | 23,95 | 23,95 | 23,95 | 15,96 | 13,5 |
| Zucker-Methacrylate | GF-MA | | 4 | 4 | | |
| | SorbitolDMA | | | | 8 | |
| | Glucose-MA | | | | | 16 |
| Beschleuniger | DiPpT | 0,44 | 0,44 | 0,44 | 0,44 | 0,44 |

| | | | | | | |
|---|---|---|---|---|---|---|
| Inhibitoren | tBBK | 0,02 | 0,02 | | | |
| | BK | | | | | 0,02 |
| | 4-Hydroxy-TEMPO | | | 0,03 | 0,006 | |
| Zement | Tonerde-zement | 18,5 | 18,5 | 18,5 | 18,5 | 16 |
| | pyrogene Kieselsäure | 3 | 3 | 3 | 3 | 3 |
| | Quarzsand | 38,49 | 38,49 | 38,48 | 38,494 | 41,04 |
| | Summe | 100 | 100 | 100 | 100 | 100 |
| | | | | | | |
| | Härterkomponente (B) | HIT-CT1 | HIT-CT1 | HIT-CT1 | HIT-CT1 | HIT-CT1 |
| | Mischungs-verhältnis (A):(B) [Vol:Vol] | 3:1 | 3:1 | 3:1 | 3:1 | 3:1 |
| | | | | | | |
| | biogener Kohlenstoff in Harzmischung [%] | 0,0 | 3,8 | 3,8 | 8,6 | 20,0 |
| | biogener Kohlenstoff aus Zucker-Methacrylat in Harzmischung [%] | 0,0 | 3,8 | 3,8 | 8,6 | 20,0 |
| | Gelzeit 25°C [min] | 4,5 | 6,5 | 4,6 | 5 | 6,5 |
| | Versagens-verbundspannung M12*72 mm [N/mm²] | 19,1 | 17,7 | 17,1 | 22,1 | 18,5 |

**Tabelle 2:** Getestete Zusammensetzungen, biogener C-Anteil und Testergebnisse in Stahlzylinder; die Anteile der aufgeführten Bestandteile sind, soweit nicht anders angegeben, in Gew.-% angegeben.

| | Harzkom-ponente (A) | **Referenz 2** | Beispiel 5 | Beispiel 6 | **Referenz 3** | Beispiel 7 | **Referenz 4** | Beispiel 8 |
|---|---|---|---|---|---|---|---|---|
| Basisharze | UMA | | | | | | 9,75 | 9,75 |
| | Bisphenol-A-(EO)2-DMA | 15,4 | 15,4 | 15,4 | | | | |
| | Vinylester | | | | 12,3 | 12,3 | | |

| | | | | | | | | |
|---|---|---|---|---|---|---|---|---|
| Reaktivverdünner | BDDMA | 18 | | | 17,05 | 3,05 | 21,25 | 5,25 |
| | PEG200 DMA | | | | | | 8,3 | 8,3 |
| | HPMA | | | | 10 | 10 | | |
| biogene Reaktivverdünner | IBOMA | 6 | 6 | 12 | | | | |
| Zuckermethacrylate | SorbitolD MA | | 18 | 12 | | 14 | | 16 |
| Beschleuniger | DiPpT | 0,56 | 0,56 | 0,56 | | | 0,56 | 0,56 |
| | Bisomer PTE | | | | 0,56 | 0,56 | | |
| Inhibitoren | tBBK | 0,05 | 0,04 | 0,05 | | | | |
| | BK | | | | | | 0,12 | 0,05 |
| | BHT | | | | 0,12 | 0,12 | | |
| Zemente | Tonerde-zement | 18,5 | 18,5 | 18,5 | | | 18,5 | 18,5 |
| | Portland-zement | | | | 16 | 16 | | |
| | pyrogene Kiesel-säure | 3 | 3 | 3 | 3 | 3 | 3 | 3 |
| | Quarzsand | 38,49 | 38,5 | 38,49 | 40,97 | 40,97 | 38,52 | 38,59 |
| | Summe | 100 | 100 | 100 | 100 | 100 | 100 | 100 |
| | | | | | | | | |
| | Härterkom ponente (B) | HIT-HY100 | HIT-HY100 | HIT-HY100 | HIT-HY100 | HIT-HY100 | HIT-HY200A | HIT-HY200A |
| | Mischungs - verhältnis (A):(B) [Vol:Vol] | 5:1 | 5:1 | 5:1 | 5:1 | 5:1 | 5:1 | 5:1 |

| | | | | | | | | |
|---|---|---|---|---|---|---|---|---|
| | biogener Kohlen-stoff in Harzmi-schung [%] | 10,7 | 30,0 | 34,3 | 0,0 | 15,0 | 0,0 | 17,1 |
| | biogener Kohlenstoff aus Zucker-Methacrylat in Harzmischung [%] | 0,0 | 19,3 | 12,9 | 0,0 | 15,0 | 0,0 | 17,1 |
| | Gelzeit 25°C [min] | 6,8 | 6,9 | 9,4 | 4,3 | 3,9 | 8,1 | 5,6 |
| | Versagensverbund-spannung M8*36 mm [N/mm²] | 24,8 | 23,5 | 21,6 | 26,05 | 24,9 | 30,7 | 22,2 |

Liste der in den Beispielen und Referenzen verwendeten Bestandteile (Erklärung der Abkürzungen) sowie ihrer Handelsnamen und Bezugsquellen:

| | |
|---|---|
| UMA | Urethanmethacrylat gemäß Beispiel 1 in DE 10 2011 017626 B4 |
| Bisphenol-A-(EO)2-DMA | Dimethacrylat des 2fach ethoxylierten Bisphenol-A, SR 348L, Fa. Sartomer |
| Vinylester | Epoxymethacrylat gemäß Beispiel 1 in DE10 2012 221441 A1 |
| BDDMA | 1,4-Butandioldimethacrylat, Visiomer BDDMA, Fa. Evonik |
| PEG200 DMA | Polyethylenglycol-200-dimethacrylat, SR 210, Fa. Sartomer |
| HPMA | 2-Hydroxypropylmethacrylat, Bisomer HPMA, Fa. Geo |
| IBOMA | Isobornylmethacrylat, Visiomer Terra IBOMA, Fa. Evonik |
| GF-MA | 3-O-Methacryloyl-1,2:5,6-bis-O-isopropyliden-D-glucofuranose, CAS-Nummer 6613-70-3, Fa. Sigma-Aldrich |
| SorbitolDMA | Sorbitoldimethacylat, Fa. ABCR |
| Glucose-MA | Methacrylsäureester der D-Glucose mit 1,5 - 2 Methacrylatgruppen pro Glucosemolekül; hergestellt durch Fa. Sohena, Tübingen |
| DiPpT | Bis(hydroxypropyl)-p-toluidin, Fa. BASF |
| Bisomer PTE | ethoxyliertes Bis(hydroxyethyl)-p-toluidin, Fa. Geo |
| tBBK | 4-tert-Butylbrenzcatechin, Fa. Merck |
| 4-Hydroxy-TEMPO | 4-Hydroxy-Tempo, Fa. BASF |
| BK | 1,2-Dihydroxybenzen, Fa. Sigma-Aldrich |
| BHT | 2,6-Di-tert-butyl-p-kresol, Fa. Merck |
| Tonerdezement | Aluminatzement, ca. 80% $Al_2O_3$ |
| Pyrogene Kieselsäure | Cab-o-Sil TS 720, Fa. Cabot |
| Portlandzement | CEM I 42,5 R Zement nach EN 197-1 |
| Quarzsand | Mittlere Korngröße ($d_{50}$) -0,25 mm |

Härterkomponenten:

| | |
|---|---|
| HIT-CT1 | Hilti HIT-CT1, Fa. Hilti |
| HIT-HY100 | Hilti HIT-HY100, Fa. Hilti |
| HIT-HY200A | Hilti HIT-HY200A, Fa. Hilti |

Alle in diesem Text genannten Normen (z.B. DIN-Normen) wurden in der zum jetzigen Zeitpunkt aktuellen Ausgabe verwendet.

**Patentansprüche**

1. Reaktionsharz-Zusammensetzung mit einer Harzkomponente (A), die mindestens ein Zuckermethacrylat enthält, und einer Härterkomponente (B), die ein Härtungsmittel für das mindestens eine Zuckermethacrylat enthält.

2. Reaktionsharz-Zusammensetzung nach Anspruch 1, wobei das mindestens eine Zuckermethacrylat ein Methacrylat eines Zuckers ausgewählt aus der Gruppe bestehend aus Triosen, Tetrosen, Pentosen, Hexosen und Mischungen aus zwei oder mehreren dieser Zucker, oder ein Methacrylat eines Zuckerderivats ausgewählt aus der Gruppe der Zuckeralkohole von Triosen, Tetrosen, Pentosen, Hexosen und Mischungen aus zwei oder mehreren dieser Zuckeralkohole, oder ein Methacrylat einer Mischung aus zwei oder mehreren dieser Zucker und Zuckeralkohole ist.

3. Reaktionsharz-Zusammensetzung nach Anspruch 2, wobei das mindestens eine Zuckermethacrylat ein Methacrylat einer Furanose oder Pyranose ist.

4. Reaktionsharz-Zusammensetzung nach Anspruch 1, wobei das mindestens eine Zuckermethacrylat ausgewählt ist aus der Gruppe bestehend aus Sorbitol-dimethacrylat, 1,2:3,4-Di-O-isopropyliden-6-O-methacryloyl-a-D-galactopyranose, 3-O-Methacryloyl-1,2:5,6-bis-O-isopropyliden-D-glucofuranose, D-Glucosemethacrylat mit 1-2 Methacrylatgruppen pro D-Glucosemolekül, und einer Mischung aus zwei oder drei dieser Verbindungen.

5. Reaktionsharz-Zusammensetzung nach einem der vorhergehenden Ansprüche, wobei die Harzkomponente (A) mindestens eine weitere radikalisch härtbare Verbindung enthält.

6. Reaktionsharz-Zusammensetzung nach Anspruch 5, wobei die mindestens eine weitere radikalisch härtbare Verbindung ein ungesättigtes Polyesterharz, ein Vinyletherharz, ein Vinylesterharz und/oder ein Vinylesterurethanharz ist.

7. Reaktionsharz-Zusammensetzung nach Anspruch 6, wobei die mindestens eine weitere radikalisch härtbare Verbindung ein Vinylesterurethanharz ist.

8. Reaktionsharz-Zusammensetzung nach einem der vorhergehenden Ansprüche, wobei das Härtungsmittel für das mindestens eine Zuckermethacrylat ein Peroxid ist.

9. Reaktionsharz-Zusammensetzung nach einem der vorhergehenden Ansprüche, wobei die Harzkomponente (A) ferner mindestens einen Reaktivverdünner enthält.

10. Reaktionsharz-Zusammensetzung nach einem der vorhergehenden Ansprüche, wobei die Harzkomponente (A) ferner

    (i) einen Beschleuniger für die Härtungsreaktion des mindestens einen Zuckermethacrylats enthält; und/oder
    (iii) mindestens einen Inhibitor enthält.

11. Reaktionsharz-Zusammensetzung nach einem der vorhergehenden Ansprüche, wobei der Anteil an Zuckermethacrylat in der Harzmischung, welche in der Harzkomponente (A) enthalten ist, mehr als etwa 20 Gew.-% der Harzmischung beträgt.

12. Reaktionsharz-Zusammensetzung nach einem der vorhergehenden Ansprüche, wobei mindestens eine der Komponenten (A) oder (B) einen anorganischen Zuschlagstoff enthält.

13. Reaktionsharz-Zusammensetzung nach einem der vorhergehenden Ansprüche, wobei die Harzkomponente (A) enthält:

    - mindestens ein Zuckermethacrylat;
    - mindestens eine weitere radikalisch härtbare Verbindung;
    - mindestens einen Reaktivverdünner;
    - mindestens einen Beschleuniger;
    - mindestens einen Inhibitor; und
    - mindestens eine hydraulisch abbindende oder polykondensierbare anorganische Verbindung,

und die Härterkomponente (B) enthält:

- mindestens ein Härtungsmittel für das mindestens eine Zuckermethacrylat;
- mindestens einen Füllstoff; und
- Wasser.

**14.** Reaktionsharz-Zusammensetzung nach einem der vorhergehenden Ansprüche, wobei die mindestens eine hydraulisch abbindende oder polykondensierbare anorganische Verbindung in der Harzkomponente (A) Zement ist und/oder der Füllstoff in der Härterkomponente (B) pyrogene Kieselsäure ist.

**15.** Verwendung einer Reaktionsharz-Zusammensetzung nach einem der Ansprüche 1 bis 14 als Bindemittel.

**16.** Verwendung nach Anspruch 15 zur chemischen Befestigung von Verankerungsmitteln in Bohrlöchern oder zum baulichen Kleben.

**17.** Verwendung nach Anspruch 16 zur chemischen Befestigung von Verankerungsmitteln aus Stahl in Bohrlöchern in Stahl oder Beton.

Europäisches Patentamt
European Patent Office
Office européen des brevets

# EUROPÄISCHER RECHERCHENBERICHT

Nummer der Anmeldung
EP 16 17 9867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2014 103923 A1 (FISCHERWERKE GMBH & CO KG [DE]) 9. Oktober 2014 (2014-10-09) | 1-5, 8-12,15, 16 | INV. C08F222/10 F16B13/14 C04B28/06 C04B40/06 |
| Y | * Absätze [0001], [0019], [0067] * * Beispiel 1 * * Ansprüche 3,4 * ----- | 6,7,13, 14,17 | ADD. C04B111/00 |
| Y | DE 10 2012 219652 A1 (HILTI AG [LI]) 30. April 2014 (2014-04-30) * Absätze [0002], [0063] * * Beispiel 1 * ----- | 6,7,13, 14,17 | |

RECHERCHIERTE SACHGEBIETE (IPC)

C08F
F16B
C04B

Der vorliegende Recherchenbericht wurde für alle Patentansprüche erstellt

1

| Recherchenort | Abschlußdatum der Recherche | Prüfer |
|---|---|---|
| Den Haag | 28. November 2016 | Fernandez Recio, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 17 9867

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2016

| Im Recherchenbericht angeführtes Patentdokument | Datum der Veröffentlichung | Mitglied(er) der Patentfamilie | Datum der Veröffentlichung |
|---|---|---|---|
| DE 102014103923 A1 | 09-10-2014 | CN 105102562 A | 25-11-2015 |
| | | DE 102014103923 A1 | 09-10-2014 |
| | | EP 2981584 A1 | 10-02-2016 |
| | | JP 2016520677 A | 14-07-2016 |
| | | US 2016060493 A1 | 03-03-2016 |
| | | WO 2015018466 A1 | 12-02-2015 |
| DE 102012219652 A1 | 30-04-2014 | AU 2013336701 A1 | 14-05-2015 |
| | | CA 2889295 A1 | 01-05-2014 |
| | | CN 104812788 A | 29-07-2015 |
| | | DE 102012219652 A1 | 30-04-2014 |
| | | EP 2912078 A1 | 02-09-2015 |
| | | JP 2015532359 A | 09-11-2015 |
| | | US 2015232595 A1 | 20-08-2015 |
| | | WO 2014064125 A1 | 01-05-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0713015 B1
- DE 102011017626 B4
- DE 102014103923 A1
- WO 14064097 A1
- WO 14064097 A
- EP 1935860 A1
- DE 19531649 A1
- WO 02051903 A1
- WO 10108939 A1
- US 3297745 A
- US 3772404 A
- US 4618658 A
- GB 2217722 A1
- DE 3744390 A1
- DE 4131457 A1
- DE 3940309 A1
- US 20020091214 A1
- US 2011071234 A1
- DE 19956509
- DE 102011077248 B1
- DE 102009059210
- WO 02079341 A
- WO 02079293 A
- WO 2011128061 A1
- DE 4231161 A1
- DE 102012221441 A1


### In der Beschreibung aufgeführte Nicht-Patentliteratur


- **M. MALIK et al.** *J. M. S. - Rev. Macromol. Chem. Phys.,* 2000, vol. C40, 139-165